# EUROPEAN PATENT SPECIFICATION

(11) **EP 2 881 212 B1**
(45) Date of publication and mention of the grant of the patent: **03.10.2018**
(21) Application number: 13825789.4
(22) Date of filing: 08.05.2013
(51) Int. Cl.: B23K 101/16, B23K 26/382, B65B 61/02, B23K 26/08

(54) **MACHINE FOR PERFORATING A STRIP OF FILM**
VORRICHTUNG ZUM PERFORIEREN EINES FILMSTREIFENS
MACHINE DE PERFORATION DE BANDE DE FILM

(30) Priority: 03.08.2012 ES 201231268
(43) Date of publication of application: 10.06.2015
(73) Proprietor: Comexi Group Industries, S.A.U, 17457 Riudellots de la Selva (Girona) (ES)
(72) Inventor: PRAT GIL, Jordi, E-17002 Girona (ES); MARCÓ PADROSA, Miquel, E-17834 Porqueres (Girona) (ES)
(74) Representative: Juncosa Miró, Jaime
(86) International application number: PCT/ES2013/000114
(87) International publication number: WO 2014/020194

(56) References cited:
- EP-A1- 1 366 890
- EP-A1- 1 366 890
- EP-A1- 1 935 553
- EP-A2- 0 564 120
- CN-A- 101 566 059
- JP-A- H09 299 412
- US-A- 4 302 654
- US-A- 4 302 654
- US-B1- 7 083 837

## Description

### Field of the Art

The object of the present invention relates to a machine for perforating a film web, particularly a machine for perforating a continuous and moving film web intended for the formation of containers, for example for containing food products.

### Background of the Invention

Many of said containers, once filled with a product, are usually closed by sealing means, so the interior thereof is hermetic. However, there are certain products, such as some food products, which due to their nature must "breathe" (exchange gaseous fluid between the internal and external atmosphere of the container) in order to maintain their properties and proper preservation. To achieve this precaution, the film of containers is usually provided with a series of small perforations providing such "breathing". Said perforations are called microperforations or macroperforations, depending on their size.

The same perforating technique used for making said breathing perforations can also be used, depending on the geometric arrangement of the perforations, to shape the containers by means of a die cutting operation, or to make notches in the film to weaken it in certain areas for the purpose of making it easier for the user to tear the film and open the container, such as known "easy-open" notches, for example.

Said "easy-open" notches can be arranged in alignment along the longitudinal or transverse direction of the film web and can completely perforate the film, if so required by the product, or alternatively if the film is a multilayer film, they can perforate only an outer layer of said film, thereby preserving air-tightness and the barrier properties of the container. For example, in containers used for coffee beans or ground coffee, the film is a multilayer film made up of three layers: polyethylene (PE)-aluminum-polypropylene (PP), in which the first layer is perforated to weaken the container and allow easy opening thereof, but the layer of aluminum is never perforated to maintain the preservation, flavor and aroma of the product.

Patent document EP 1 059 139 is known for that purpose, disclosing an optical system for the microperforation of moving or fixed thermoplastic or cellulosic films, comprising one or more laser sources delivering, via a coupling, homogenizing and power distribution device, light energies to one or more cables comprising fiber optics, the ends of which are connected either in a line to a support batten or to a matrix block and, after passing into a homogenizing-focusing system, generating a large number of perforating light spots of very small diameter on the thermoplastic or cellulosic film, characterized in that the homogenizing and focusing device comprises elementary fiber optics which have a conical diffusing end.

In turn, machines for perforating a film web are also known, which basically comprise an unwinding device that unwinds a film web from a supply reel, an intermediate perforating station provided with at least one laser perforator that perforates said film web coming from said supply reel, a rewinding device that rewinds the perforated film web onto a take-up reel, and a main pulling unit that pulls the film web from the perforating station towards said take-up reel.

With such machines, even though the desired holes or perforations are made, the pulling speed that the film web experiences as it passes through the perforating station can be irregular, which affects the arrangement and size of the perforations. Another additional drawback is that with the pulling applied by said pulling unit that pulls the film web and due to the elasticity characteristic of said film web, the film web can be stretched and the perforations can be deformed, i.e., elongated. Furthermore, if the perforations were made on a stretched film web under excessive tension, the perforations can be too small and even blind when the tension of the film web is released and the film web elastically recovers its normal state, which detracts from the performance of perforations.

Patent document US-A-4 302 654, regarded as the closest prior art, discloses a machine for perforating a film web using laser beams entering through perforated masks actuated by shafts. The rolls present in US-A-4 302 654 are freely rotatable idle guide rolls.

### Disclosure of the invention

The present invention contributes to mitigating the preceding and other drawbacks by providing a machine for perforating a film web comprising an unwinding device that unwinds a film web from a supply reel, a perforating station provided with at least one laser perforator that perforates said film web coming from said supply reel, a rewinding device that rewinds the perforated film web onto a take-up reel actuated by a take-up motor, and a main pulling unit that pulls the film web upstream of said take-up reel and downstream of said perforating station.

The machine of the present invention is characterized in that the perforating station comprises first and second supporting rollers that support a section of the film web therebetween in a predetermined position in relation to said laser perforator, where said first and second supporting rollers are actuated in unison by a processing advancing motor in coordination with the operation of said main pulling unit, such that the section of the film web exposed directly to the laser perforator does no suffer any stretching at all in the treatment area of the perforating station.

The main pulling unit is actuated by a pulling motor, and a first tension sensor is arranged for measuring the tension of the film web upstream of the main pulling unit and downstream of the perforating station. An electronic control device controls the operation of the processing advancing motor moving the first and second supporting rollers in the perforating station based on a signal received from said first sensor.

The unwinding device includes a supply motor that actuates the supply reel, or alternatively, a controlled brake that retains the supply reel, and a second tension sensor is arranged for measuring the tension of the film web upstream of the perforating station and downstream of the supply reel. An electronic control device controls operation of the supply motor or the controlled brake based on a control signal received from the second tension sensor.

The electronic control device is preferably configured for using proportional-integral-derivative PID control algorithms for controlling the operation of the processing advancing motor and the supply motor or the controlled brake based on the control signals received from the first and second tension sensors.

Therefore, both the pulling motor of the main pulling unit and the supply motor or controlled brake of the unwinding device are controlled depending on the speed of the section of the film web in the perforating station imparted by the first and second supporting rollers actuated by the processing advancing motor.

Thus, the first and second supporting rollers actuated in unison by the processing advancing motor assure constant advancing speed of the section of the film web comprised between them in the perforating station, so the perforations made in this section of the film web by the laser perforator have a regular and stable shape and arrangement.

The laser perforator comprises an arrangement of mirrors that allow orienting one or more laser rays, such that the perforations having a specific geometric shape and arrangement are made, which allows making microperforations, macroperforations, "easy-open" notches, "easy-open" slots, shaping containers or perforating only an outer layer of a film web made of a multilayer complex material.

The machine of the present invention has a first space conditioned for installing an application station performing printing, lacquering or laminating operations on the film web before said film is perforated, said first space being arranged between the perforating station and the unwinding device.

The machine also has a second space conditioned for installing a cutting station performing longitudinal cutting operations in the film web once it has been perforated, said second space being arranged between the perforating station and the rewinding device.

### Brief Description of the Drawings

The foregoing and other features will be more clearly understood based on the following detailed description of an embodiment with reference to the attached drawings, in which:

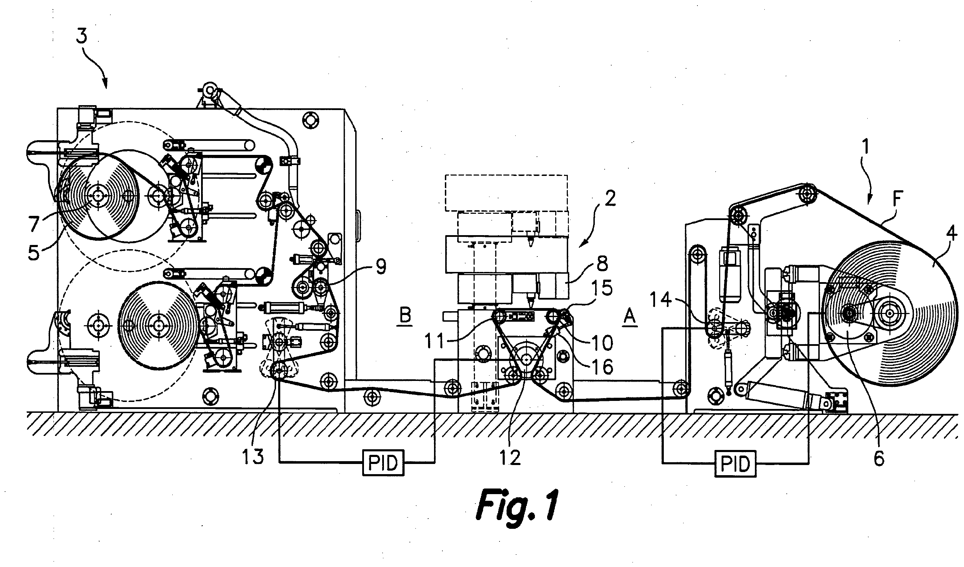

Figure 1 (the only drawing) is a general schematic side elevational view of a machine for perforating a film web according to an embodiment of the present invention.

### Detailed Description of an Exemplary Embodiment of the Invention

As shown in Figure 1, according to one embodiment of the present invention, the machine for perforating a film web comprises an unwinding device 1 provided with a supply reel 4 from which a film web F is unwound, a perforating station 2 located downstream of said unwinding device 1 and provided with a laser perforator 8 that perforates the film web F from the supply reel 4, and a rewinding device 3 located downstream of said perforating station 2 and provided with a take-up reel 5 onto which the perforated film web F is rewound.

The supply reel 4 of the unwinding device 1 is actuated by a supply motor 6, although the supply reel 4 can alternatively be partially retained by a controlled brake (not shown) providing an equivalent result. The take-up reel 5 of the rewinding device 3 is actuated by a take-up motor 7. Adjacent to the rewinding device 3 and upstream of the take-up reel 5 there is a main pulling unit 9 actuated by a pulling motor (not shown) that pulls the film web F.

The film web F stored on the supply reel 4 of the unwinding device 1 is unwound from said device, goes through the perforating station 2 where it is subjected to the action of the laser perforator 8 which makes a series of perforations thereon, and from there it continues to the rewinding device 3 where it is rewound onto the take-up reel 5. In the embodiment shown, the rewinding device 3 includes an automatic reel change system for replacing full take-up reels with empty take-up reels.

In the perforating station 2 there are first and second supporting rollers 10, 11 that support a section of the film web F therebetween in a predetermined position suitable for being subjected to the action of the laser perforator 8. These first and second supporting rollers 10, 11 are actuated in unison by a processing advancing motor 12.

The first supporting roller 10 is located upstream of the second supporting roller 11, and a pressure regulating actuator 16 pushes a pressure roller 15 which presses the film web F against the first supporting roller 10 with controlled pressure. Given that the first and second supporting rollers 10, 11 turn at the same speed, the section of the film web F comprised between them does not experience unwanted stretching that may change the result of the perforation.

At a first point of the machine located upstream of the main pulling unit 9 and downstream of the perforating station 2, there is arranged a first tension sensor 13 which measures tension of the film web F at this first point, and the operation of the processing advancing motor 12 which rotates in unison the first and second supporting rollers 10, 11 in the perforating station 2 is controlled by an electronic control device based on a control signal received from said first tension sensor 13, which can be, for example, a swinging roller device (like the one shown) or a load cell.

The electronic control device comprises computing means that preferably implement a proportional-integral-derivative PID control algorithm to perform said control of the operation of the processing advancing motor 12 based on the control signal received from the first tension sensor 13.

At a second point of the machine located upstream of the perforating station 2 and downstream of the supply reel 4, there is arranged a second tension sensor 14 which measures the tension of the film web F at this second point, and the operation of the supply motor 6 that actuates the rotation of the supply reel 4 in the unwinding device 1 is controlled by the electronic control device based on a control signal received from said second tension sensor 14, which can be a swinging roller device (like the one shown) or a load cell.

Alternatively, in the event that the rotation of the supply reel 4 is partially retained by said controlled brake instead of actuated by the supply motor 6, operation of the controlled brake is controlled by the electronic control device based on said control signal received from the second tension sensor 14.

The computing means of the electronic control device also preferably implement a proportional-integral-derivative PID control algorithm for controlling operation of the supply motor 6, or where appropriate, of the controlled brake, based on the control signal received from the second tension sensor 14.

The laser perforator 8 of the perforating station comprises a system of mirrors which orient one or more laser rays such that said laser rays can make perforations having a specific geometric shape and arrangement. For example, the laser perforator can make microperforations, macroperforations, "easy-open" notches, "easy-open" slots, perform container shaping and in the event that the film web F is made of a multilayer complex material, it can perforate only an outer layer of the multilayer film strip.

Furthermore, the machine comprises a first space A conditioned for installing an application station (not shown) capable of performing printing, lacquering or laminating operations on the film web F before said strip has been perforated, with said first space A being arranged between the perforating station 2 and the unwinding device 1.

Similarly, the machine comprises a second space B conditioned for installing a cutting station (not shown) configured for performing longitudinal cutting operations on the film web F once said strip has been perforated, with said second space B being arranged between the perforating station 2 and the rewinding device 3. In such case, the film web F is subdivided into a plurality of narrower film webs which are rewound onto respective take-up reels.

A skilled person will devise changes and modifications to the embodiment shown and described without departing from the scope of the invention as it is defined in the attached claims.

## Claims

1. A machine for perforating a film web, comprising:
- an unwinding device (1) that unwinds a film web (F) from a supply reel (4);
- a perforating station (2) provided with at least one laser perforator (8) that perforates said film web (F) coming from said supply reel (4);
- a rewinding device (3) that rewinds the perforated film web (F) onto a take-up reel (5) actuated by a take-up motor (7); and
- a main pulling unit (9) actuated by a drive motor that pulls the film web (F) upstream of said take-up reel (5) and downstream of said perforating station (2),
**characterized in that** the perforating station (2) comprises:
first supporting roller (10) located upstream of a second supporting roller (11) supporting therebetween a section of the film web (F) in a predetermined position in relation to said laser perforator (8), the laser perforator (8) performing the perforation in said section of the film web (F);
said first and second supporting rollers (10, 11) are configured to turn at the same speed actuated in unison by a processing advancing motor (12) in coordination with the operation of said drive motor of said main pulling unit (9) assuring constant advancing speed of the section of the film web comprised between them in the perforating station, to obtain a regular and stable shape of the perforations made in this section of the film web (F) by the laser perforator (8) and to avoid unwanted stretching that may change the result of the perforation in said section of the film web (F).

2. The machine for perforating a film web according to claim 1, **characterized in that** a first tension sensor (13) is arranged for measuring the tension of the film web (F) upstream of the main pulling unit (9) and downstream of the perforating station (2), and an electronic control device controls the operation of said processing advancing motor (12) based on a control signal received from said first tension sensor (13).

3. The machine for perforating a film web according to claim 2, **characterized in that** the electronic control device comprises computing means that implement a proportional-integral-derivative (PID) control algorithm for controlling the operation of the processing advancing motor (12) based on said control signal received from the first tension sensor (13).

4. The machine for perforating a film web according to claim 2 or 3, **characterized in that** the first tension sensor (13) is selected from a swinging roller device and a load cell.

5. The machine for perforating a film web according to any one of the preceding claims, **characterized in that** said supply reel (4) is actuated by a supply motor (6) or retained by a controlled brake, and a second tension sensor (14) is arranged for measuring the tension of the film web (F) upstream of the perforating station (2) and downstream of the supply reel (4), and said electronic control device controls the operation of said supply motor (6) or of said controlled brake based on a control signal received from said second tension sensor (14).

6. The machine for perforating a film web according to claim 5, **characterized in that** the electronic control device comprises computing means that implement a proportional-integral-derivative (PID) control algorithm for controlling the operation of the supply motor (6) or of said controlled brake based on said control signal received from the second tension sensor (14).

7. The machine for perforating a film web according to claim 5 or 6, **characterized in that** the second tension sensor (14) is selected from a swinging roller device and a load cell.

8. The machine for perforating a film web according to claim 1, **characterized in that** the first supporting roller (10) is located upstream of the second supporting roller (11), and a pressure roller (15) presses the film web (F) against the first supporting roller (10) with a pressure controlled by at least one pressure regulating actuator (16).

9. The machine for perforating a film web according to claim 1, **characterized in that** the laser perforator (8) is configured for making perforations having a specific geometric shape and arrangement that allows making microperforations, macroperforations, "easy-open" notches, "easy-open" slots, shaping containers and perforating only one layer of a film web made of a multilayer complex material.

10. The machine for perforating a film web according to claim 1, **characterized in that** an application station that performs printing, lacquering or laminating operations on the film web (F) before the film web (F) has been perforated is arranged in a first space (A) conditioned between the perforating station (2) and the unwinding device (1).

11. The machine for perforating a film web according to claim 1, **characterized in that** a cutting station that performs longitudinal cutting operations on the film web once the film web has been perforated is arranged in a second space (B) conditioned between the perforating station (2) and the rewinding device (3).

## Patentansprüche

1. Vorrichtung zum Perforieren einer Filmbahn, umfassend:
- ein Abwickelgerät (1), welches eine Filmbahn (F) aus einer Vorratsspule (4) abwickelt;
- eine Perforationsstation (2), welche mit mindestens einem Laserperforator (8) versehen ist, welcher die genannte, aus der genannten Vorratsspule (4) kommenden Filmbahn (F) perforiert;
- ein Umwickelgerät (3), welches die perforierte Filmbahn (F) auf einer Aufwickelspule (5) umwickelt, welche von einem Aufwickelmotor (7) betätig wird; und
- eine Hauptzugeinheit (9), welche von einem Antriebsmotor betätigt wird, welcher die Filmbahn (F) stromaufwärts der genannten Aufwickelspule (5) und stromabwärts der genannten Perforationsstation (2) zieht,
**dadurch gekennzeichnet, dass** die Perforationsstation (2) Folgendes umfasst:
eine erste Stützrolle (10), welche sich stromaufwärts einer zweiten Stützrolle (11) befindet, so dass sie dazwischen einen Abschnitt der Filmbahn (F) in einer vorbestimmten Stellung bezüglich des genannten Laserperforators (8) stützen, wobei der Laserperforator (8) die Perforation im genannten Abschnitt der Filmbahn (F) durchführt;
die genannte erste und genannte zweite Stützrolle (10, 11) sind dazu ausgebildet, sich mit der gleichen Geschwindigkeit zu drehen, von einem Verarbeitungsvorschubmotor (12) in Koordination mit dem Betrieb des genannten Antriebsmotors der genannten Hauptzugeinheit (9) übereinstimmend betätigt, so dass die konstante Vorschubgeschwindigkeit des Abschnitts der Filmbahn gewährleistet wird, welcher dazwischen in der Perforationsstation umfasst ist, um eine regelmäßige und stabile Form der in diesem Abschnitt der Filmbahn (F) durch den Laserperforator (8) erstellten Perforationen zu erhalten und um ein ungewünschtes Strecken zu verhindern, welches das Ergebnis der Perforation im genannten Abschnitt der Filmbahn (F) ändern kann.

2. Vorrichtung zum Perforieren einer Filmbahn nach Anspruch 1, **dadurch gekennzeichnet, dass** ein erster Spannungssensor (13) zum Messen der Spannung der Filmbahn (F) stromaufwärts der Hauptzugeinheit (9) und stromabwärts der Perforationsstation (2) angeordnet ist, und dass ein elektronisches Steuergerät den Betrieb des genannten Verarbeitungsvorschubmotors (12) basierend auf ein vom genannten ersten Spannungssensor (13) empfangenes Steuersignal steuert.

3. Vorrichtung zum Perforieren einer Filmbahn nach Anspruch 2, **dadurch gekennzeichnet, dass** das elektronische Steuergerät Rechenmittel umfasst, welche einen Proportional-Integral-Differenzial (PID)-Steueralgorithmus zum Steuern des Betriebs des Verarbeitungsvorschubmotors (12) basierend auf dem genannten, vom ersten Spannungssensor (13) empfangenen Steuersignal implementiert.

4. Vorrichtung zum Perforieren einer Filmbahn nach Anspruch 2 oder 3, **dadurch gekennzeichnet, dass** der erste Spannungssensor (13) aus einem Schwingrollengerät und einer Kraftmesszelle ausgewählt wird.

5. Vorrichtung zum Perforieren einer Filmbahn nach einem der vorhergehenden Ansprüche, **dadurch gekennzeichnet, dass** die genannte Vorratsspule (4) von einem Versorgungsmotor (6) betätigt wird oder von einer gesteuerten Bremse gehalten wird, und dass ein zweiter Spannungssensor (14) zum Messen der Spannung der Filmbahn (F) stromaufwärts der Perforationsstation (2) und stromabwärts der Vorratsspule (4) angeordnet ist, und dass das genannte elektronische Steuergerät den Betrieb des genannten Versorgungsmotors (6) oder der genannten gesteuerten Bremse basierend auf einem vom genannten zweiten Spannungssensor (14) empfangenen Steuersignal steuert.

6. Vorrichtung zum Perforieren einer Filmbahn nach Anspruch 5, **dadurch gekennzeichnet, dass** das elektronische Steuergerät Rechenmittel umfasst, welche einen Proportional-Integral-Differenzial (PID)-Steueralgorithmus zum Steuern des Betriebs des Versorgungsmotors (6) oder der genannten gesteuerten Bremse basierend auf dem genannten, vom zweiten Spannungssensor (14) empfangenen Steuersignal implementiert.

7. Vorrichtung zum Perforieren einer Filmbahn nach Anspruch 5 oder 6, **dadurch gekennzeichnet, dass** der zweite Spannungssensor (14) aus einem Schwingrollengerät und einer Kraftmesszelle ausgewählt wird.

8. Vorrichtung zum Perforieren einer Filmbahn nach Anspruch 1, **dadurch gekennzeichnet, dass** sich die erste Stützrolle (10) stromaufwärts der zweiten Stützrolle (11) befindet, und dass eine Druckrolle (15) die Filmbahn (F) gegen die erste Stützrolle (10) mit einem, von mindestens einem Druckregelaktuator (16) gesteuerten Druck drückt.

9. Vorrichtung zum Perforieren einer Filmbahn nach Anspruch 1, **dadurch gekennzeichnet, dass** der Laserperforator (8) dazu ausgebildet ist, Perforationen zu erstellen, welche eine spezifische geometrische Form und Anordnung aufweisen, welche das Erstellen von Mikroperforationen, Makroperforationen, "leicht zu öffnenden" Nuten, "leicht zu öffnenden" Ritzen, die Formgebung von Behältern und das Perforieren nur einer Schicht aus einer Filmbahn hergestellt aus einem komplexen Mehrschichtmaterial erlaubt.

10. Vorrichtung zum Perforieren einer Filmbahn nach Anspruch 1, **dadurch gekennzeichnet, dass** eine Auftragsstation, welche die Druck-, Lackierung- oder Walzvorgänge auf der Filmbahn (F) durchführt, bevor die Filmbahn (F) perforiert worden ist, in einem ersten Raum (A) angeordnet ist, welcher zwischen der Perforationsstation (2) und dem Abwickelgerät (1) konditioniert ist.

11. Vorrichtung zum Perforieren einer Filmbahn nach Anspruch 1, **dadurch gekennzeichnet, dass** eine Schneidestation, welche längliche Schneidevorgänge auf der Filmbahn durchführt, sobald die Filmbahn perforiert worden ist, in einem zweiten Raum (B) angeordnet ist, welcher zwischen der Perforationsstation (2) und dem Umwickelgerät (3) konditioniert ist.

## Revendications

1. Une machine pour perforer une bande de film, comportant :
- un dispositif de débobinage (1) qui débobine une bande de film (F) d'une bobine d'alimentation (4) ;
- une station de perforation (2) pourvue d'au moins un perforateur laser (8) qui perfore cette bande de film (F) provenant de cette bobine d'alimentation (4) ;
- un dispositif de rebobinage (3) qui rebobine la bande de film perforée (F) sur une bobine réceptrice (5) entraînée par un moteur de récupération (7) ; et
- une unité de traction principale (9) entraînée par un moteur d'entraînement qui tire la bande de film (F) en amont de cette bobine réceptrice (5) et en aval de cette station de perforation (2),
**caractérisé en ce que** la station de perforation (2) comporte :
un premier rouleau de support (10) situé en amont d'un deuxième rouleau de support (11) supportant entre eux une portion de la bande de film (F) dans une certaine position par rapport à ce perforateur laser (8), le perforateur laser (8) effectuant la perforation dans cette portion de la bande de film (F) ;
ces premier et deuxième rouleaux de support (10, 11) sont configurés pour tourner à la même vitesse , entraînés à l'unisson par un moteur de traitement en cours d'avancement (12) en coordination avec le fonctionnement de ce moteur d'entraînement de cette unité de traction principale (9) assurant une vitesse d'avancement constante de la portion de bande de film comprise entre eux dans la station de perforation, pour obtenir une forme régulière et stable de la performation effectuée dans cette portion de la bande de film (F) par le perforateur laser (8) et pour éviter un étirement indésirable qui puisse changer le résultat de la perforation dans cette portion de la bande de film (F).

2. La machine pour perforer une bande de film conformément à la revendication 1, **caractérisée en ce qu'**un premier capteur de tension (13) est aménagé pour mesurer la tension de la bande de film (F) en amont de l'unité d'étirement principale (9) et en aval de la station de perforation (2) et un dispositif de contrôle électronique contrôle le fonctionnement de ce moteur de traitement en cours d'avancement (12) basé sur un signal de contrôle reçu de ce premier capteur de tension (13).

3. La machine pour perforer une bande de film conformément à la revendication 2, **caractérisée en ce que** le dispositif de contrôle électronique comporte des moyens informatiques qui mettent en oeuvre un algorithme de contrôle proportionnelle-intégrale-dérivée (PID) pour contrôler le fonctionnement du moteur de traitement en cours d'avancement (12) basé sur ce signal de contrôle reçu du premier capteur de tension (13).

4. La machine pour perforer une bande de film conformément à la revendication 2 ou 3, **caractérisée en ce que** le premier capteur de tension (13) est sélectionné d'un dispositif à rouleaux oscillants et une cellule de charge.

5. La machine pour perforer une bande de film conformément à une quelconque des revendications précédentes , **caractérisée en ce que** cette bobine d'alimentation (4) est entraînée par un moteur d'alimentation (6) ou retenue par un frein contrôlé et un deuxième capteur de tension (14) est aménagé pour mesurer la tension de la bande de film (F) en amont de la station de perforation (2) et en aval de la bobine d'alimentation (4) et ce dispositif de contrôle électronique contrôle le fonctionnement de ce moteur d'alimentation (6) ou de ce frein contrôlé basé sur un signal de contrôle reçu de ce deuxième capteur de tension (14).

6. La machine pour perforer une bande de film conformément à la revendication 5, **caractérisée en ce que** le dispositif de contrôle électronique comporte des moyens informatiques qui mettent en oeuvre un algorithme de contrôle proportionnelle-intégrale-dérivée (PID) pour contrôler le fonctionnement du moteur d'alimentation (6) ou de ce frein contrôlé basé sur le signal reçu du deuxième capteur de tension (14).

7. La machine pour perforer une bande de film conformément à la revendication 5 ou 6, **caractérisée en ce que** le deuxième capteur de tension (14) est sélectionné d'un dispositif de rouleau oscillant et une cellule de charge.

8. La machine pour perforer une bande de film conformément à la revendication 1, **caractérisée en ce que** le premier rouleau de support (10) est situé en amont du deuxième rouleau de support (11) et un rouleau de pression (15) presse la bande de film (F) contre le premier rouleau de support (10) avec une pression contrôlée par au moins un actionneur régulateur de pression (16).

9. La machine pour perforer une bande de film conformément à la revendication 1, **caractérisée en ce que** le perforateur laser (8) est configuré pour faire des perforations ayant une forme géométrique et un aménagement spécifiques qui permettent de faire des microperforations, des macroperforations, des encoches faciles à ouvrir, des fentes faciles à ouvrir, donnant forme à des récipients et ne perforant qu'une couche d'une bande de film faite en un matériau complexe multicouches.

10. La machine pour perforer une bande de film conformément à la revendication 1, **caractérisée en ce qu'**une station d'application effectuant les opérations d'impression, de vernissage ou de laminage sur la bande de film (F) avant que la bande de film (F) n'ait été perforée est aménagée dans un premier espace (A) conditionné entre la station de perforation (2) et le dispositif de débobinage (1).

11. La machine pour perforer une bande de film conformément à la revendication 1, **caractérisée en ce qu'**une station de découpage qui effectue les opérations de découpage longitudinal de la bande de film lorsque la bande de film a été perforée est aménagée dans un deuxième espace (B) conditionné entre la station de perforation (2) et le dispositif de rebobinage (3).
